Europäisches Patentamt

European Patent Office

Office européen des brevets

(19)

(11) Publication number: **0 094 514**
**B1**

(12)                     EUROPEAN PATENT SPECIFICATION

(45) Date of publication of patent specification: **10.08.88**

(51) Int. Cl.⁴: **G 06 F 15/20**

(21) Application number: **83103800.5**

(22) Date of filing: **20.04.83**

(54) Designation of footnotes and footnote references.

(30) Priority: **17.05.82 US 378929**

(43) Date of publication of application:
**23.11.83 Bulletin 83/47**

(45) Publication of the grant of the patent:
**10.08.88 Bulletin 88/32**

(84) Designated Contracting States:
**DE FR GB IT**

(56) References cited:
**GB-A- 771 551**
**US-A-2 762 485**

**INFORMATION STORAGE AND RETRIFVAL;
VOL: !=; NO: %/6, 1974, pp. 211-228,
Pergamon Press OXFORD (GB), V.J. RYAN et
al. : "Comuterized text editing and processing
with builtin indexing"**

(73) Proprietor: **International Business Machines
Corporation
Old Orchard Road
Armonk, N.Y. 10504 (US)**

(72) Inventor: **Repass, James Terry
13013 Broadmeade Avenue
Round Rock Texas 78664 (US)**
Inventor: **Ruiz, Thomas Michael
7407 Attar Cove
Austin Texas 78759 (US)**
Inventor: **Shipp, Kenneth Osborn, Jr.
1108 Gemini Drive
Austin Texas 78758 (US)**
Inventor: **Wood, Richard Brian
808 Cambridge
Round Rock Texas 78664 (US)**

(74) Representative: **Bonneau, Gérard
Compagnie IBM France Département de
Propriété Industrielle
F-06610 La Gaude (FR)**

EP 0094514 B1

## Description

### Technical field

This invention relates generally to footnoting documents, and more specifically to a method of, and system for, designating both footnote references in body text, and corresponding footnotes.

### Background art

Footnoting of a document such as a legel brief, book, manuscript, etc. is a well known technique of providing both uncluttered and smooth flowing information and thoughts, and background or supporting detail to a reader at different locations within the documents. The smooth flowing information is the body text of a document, and the supporting detail is made up of footnote text. In constructing such a document, efficient management has always been an elusive skill. This was so when documents were handwritten, and still presents a significant economic and throughput burden today. This is so even with the availability of flexible keyboard/display word processing systems.

During the handwritten document era, a footnote reference too low on a page often left insufficient room for an aesthetically pleasing, and well placed and proportioned, accompanying footnote or a portion thereof. The solution was to terminate the page earlier than desired, abut text against the bottom of the page and chance mismanagement of the succeeding page, write smaller, etc. Mismanagement and/or early termination remain major problems today. This is so even with the availability of modern word processing systems. The available approaches for an operator or author in preparing a footnoted document are for the most part undesirable. Excessive planning is probably the most common approach, and yet, multiple drafts are the most common result. Partially filled pages, an excessive number of footnote references and footnotes appearing on different pages, an unappealing proportion mismatch of body and footnote text, and an excessive number of pages containing only footnotes remain major problems following planning and multiple drafts.

The above mentioned problems have not gone unnoticed, however. One system on the market today provides for footnote management upon printout. With this system, an operator can prepare a footnoted document in one pass, but particular operator attention is required. During preparation, body text is keyed to a body text frame up to a reference point, a footnote reference number is keyed, a footnote frame is called, a corresponding footnote number is keyed, text for the footnote is keyed, and then the body text frame is recalled. Body and footnote text are stored separately. The footnote text is stored in a footnote library for later recall. Following document preparation, there is an opportunity to separately review and edit the body and footnote text, but there is no opportunity to display review and edit an assembled document prior to printing. That is, the first opportunity an operator has to view an assembled document is following printing. During printout, the system merges the body and footnote text. However, resulting aesthetics on occasion are less than desired. This is due in part to imposed system restraints such as a requirement that there be at least one line of body text on each page. In this case, large unprinted areas on numerous pages can occur. On the whole though, planning and multiple drafts are reduced, and preparation is in a logical manner. Even so, glaring disadvantages still exist. The most notable is that the ability to efficiently edit and/or make changes is severely restricted. An example of a result of a simple editing attempt is loss of correspondence between footnote reference designations and footnote designations if footnotes are to be added, intermingled, repositioned, etc. Inserting a reference designation among existing reference designations requires a subsequent additional operation for redesignating all following reference designations. This is also the case of footnote designations if a footnote is to be inserted or deleted. Another disadvantage is the above mentioned attention that is required of an operator. An error in either a footnote reference designation or a footnote designation can either prevent later document assembly during printout, or require additional editing and printout.

With the above in mind, additional related problems exist and flexibility of available systems is somewhat restricted. Readdressing the handwritten document era for a moment, mere designation of footnote references and footnotes, standing alone, was fraught with problems. An author in referencing a footnote could readily apply the same designation to both a reference point and corresponding footnote if the designation for a prior reference and footnote were recalled or on the same page. However, a loss of recollection and an absence of a prior same page designation required either a note pad and pen or leafing through previously prepared pages. Obtaining a final inked copy with a minimum number of drafts required particular writer attention. Editing of inked copy was unacceptable, if not impossible. Paint and lift-off compositions are more modern day conveniences. Although other problems were present, the above mentioned problems alone quelled most desires to be unique in the designation area.

Advancing again to the present, modern day keyboard/display word processing systems, although beneficial in many respects, have not been structured and/or programmed to efficiently handle even rather simple designation problems. For one thing, many envisioned approaches to handling even mundane author desires required programming and/or structure additions which would be prohibitive from a cost standpoint. With this in mind, any thoughts of providing for different types of footnotes such as book and magazine descriptions with different typestyles, and using different designations for each, have quickly been abandoned. This fact has not been diminished in any respect when a desired to reset designations on a chapter basis, and/or designations are to be made up of both fixed and variable data, have been considered. When these considerations are coupled with the fact that separately stored body and footnote text must be brought together with a reasonable per page correspondence between footnote references and corresponding footnotes, there has been a compounding of the envisioned tasks and problems.

The above described capabilities of penmanship and word processing systems are prior art to the extent that a semblance of a desired end result is achievable. What has not been achievable though, are the flexibility to efficiently both meet author desires and manage designation tasks from input to output. It is these deficiencies which cause the prior art to fall short of either anticipating or rendering the instant invention obvious. More specifically, the ability to automatically designate footnotes and footnote references based upon operator initially selected and updated designations is lacking.

Disclosure of the invention

The method of the claimed invention for designating footnotes and footnote references consists in preparing the body text and the footnote text with the help of the keyboard and display, and separately storing the footnote text and body text in the memory; then displaying a menu on the display, giving the operator the specifications enabling the variable portion of the designation for the footnote and the corresponding footnote reference to be defined, inputting into the system by means of the keyboard, a beginning designation of a character category for the variable portion, for designating a set of footnotes, and changing automatically, the designations to be applied to subsequent footnotes, such that each set of footnotes will be distinctively designated upon combination of separately stored footnote text and body text during assembly of the footnoted document.

Practically, the operator has the flexibility of defining designations by specifying a variable data category such as a numeric or other graphic character, the initial variable data such as the numeral 3, fixed data surrounding the variable data such as parenthesis, and a vertical location for the designations such as half indexed up on a line. Thereafter, body text is keyed up to a footnote reference point. During this body text keying, the text is displayed and editing is permitted. At the footnote reference point, a menu is called from which a footnote task is selected. This causes a display frame to be presented for keying the footnote. Editing of the footnote is also permitted. Following input of the footnote, the operator recalls the body text display frame for continued keying, and the footnote is stored away in a footnote library. Upon recall of the body text display frame, the system applies an appropriate footnote reference designation to the body text in a defined vertical location at the footnote reference point, and logs the location in the footnote library of the corresponding footnote. For example, if a previous footnote reference designation were a bracketed· two ([2]), half indexed up on a line, the appropriate footnote reference designation would be a bracketed three ([3]), half indexed up on the line being operated upon. The operator also has the ability to update the variable data, reset the variable data to its initial value, and select new variable data to be intermingled with initially selected variable data, with the system providing the necessary and desired sequencing. For example, the operator can cause the designation at the next footnote reference point to be an underscored asterisk (*) by re-specifying the variable data, and the surrounding fixed data. A subsequent reference point designation will be **. A recall of the original designation makeup will result in the next reference point being designated with a bracketed four ([4]), half indexed up on the line. As such, the system automatically manages designation of footnote references and corresponding footnotes once the designations have been defined or updated. Should later editing necessitate changes in the variable data, this will also be automatically taken care of by the system. Following input keying of the body and footnote text, operator procedure calls for causing the system to assemble the body and footnote text. The assembly operation involves combined merge and pagination operations. Following assembly, the document can be display recalled on a page basis for review and editing. Thereafter, the document is ready to be printed.

Brief description of the drawing

Figure 1 is a pictorial representation of a page of a footnoted document illustrating one set of footnote and footnote reference designations.

Figure 2 is a pictorial representation of another set of footnote and footnote reference designations.

Figure 3 is a pictorial representation of yet another set of footnote and footnote reference designations.

Figure 4 is a pictorial representation of a body text frame including inputted body text to the point of a first footnote reference.

Figure 5 is a pictorial representation of a footnote text frame including inputted footnote text referenced by the reference point in Figure 4.

Figure 6 is another pictorial representation of the body text frame shown in Figure 4 having additional inputted body text to the point of second footnote reference.

Figure 7 is a pictorial representation of another footnote text frame having inputted footnote text for the second footnote reference in Figure 6.

Figure 8 is a block diagram showing a word processing system used for performing the invention of this application.

Figure 9 is a block diagram illustrating the makeup of the processor shown in Figure 8.

Best mode for carrying out the invention

General description

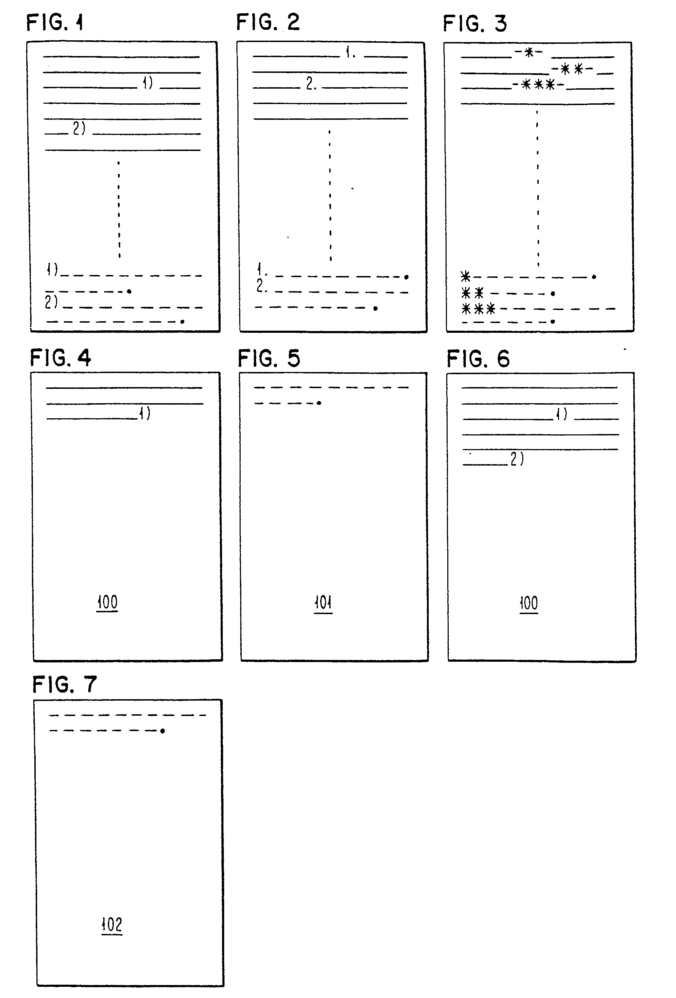

For a general understanding of the invention, reference is first directed to Figures 1 through 3. In these figures are illustrated three pages which can be taken as the first page of any three chapters of a footnoted document. Alternatively, the three pages can be considered to be the first footnoted pages of three different documents. The solid lines represent body text and the dashed lines represent footnote text.

For purposes of the following explanation, it is to be noted that the Arabic numerals 1 and 2 in Figure 1 along with the close parenthesis symbols are positionally located, half indexed up on the lines with which they appear. In Figure 2, the numerals 1 and 2 and the periods appear on line with the remainder of the lines with which they appear. In Figure 3, the asterisks and hyphens also appear on line with the remainder of the lines with which they appear. The Arabic numerals 1 and 2, and the asterisks make up a variable portion of the overall designations. The close parenthesis, periods, and hyphens make up a fixed portion of the designations.

The variable portions of the designations are functional and are for purposes of numbering the footnote references and footnotes. These portions are variable in that they will change from footnote to footnote and footnote reference to footnote reference. The fixed portions of the designations can be both functional and cosmetic. These portions will remain fixed from footnote to footnote and footnote reference to footnote reference, until changed by either the system or the operator as will be more fully described later herein. The fixed portions can be functional in that they may be varied for different types of background material such as magazines and books. These portions can be cosmetic in that they may be selected and used to improve the aesthetic qualities of the document being prepared.

From the above, both Arabic numerals or numeric characters, and other graphic characters can be used to define the variable portion of the designations. In the preferred embodiment being described, when numeric characters are selected, there will be an incrementing by one of an initially selected number for each following designation. When other graphic characters are selected, there will be an increase by one in the number of characters for each following designation. The fixed portion of the designations can be any character or combination of characters which are alternatively referred to later herein as leading text and/or trailing text. For example, a number one (1) can be merely followed by a hyphen, or totally surrounded with a preceding hyphen, an overstrike, a following hyphen, and an underscore. In addition, the designations can be made up of variable portions only. As is obvious, confusion will be avoided if different characters are selected for the fixed and variable portions of the designations.

In defining the variable portion of the designations, an operator can select any beginning number or number of characters. For example, the number 3 can be selected. If so, and from the above, the following designation will include the number 4. If two asterisks are selected as the variable portion of a beginning designation, the following designation will be three asterisks. This is since the system is programmed to sequence the variable portion of the designations. The system is also programmed to sequence designations having common variable portions irrespective of intermingled non-common variable portions. For example, if the order and makeup of designations is 3, 4, **, and ***, and the operator again calls for Arabic numerals, the next designation will be the number 5. In addition, an operator can specify a resetting of the variable portion of the designations to that initially defined such that, for example, designations are chapter or page oriented. That is, footnotes and footnote references can be renumbered beginning with the number 1 at the beginning of each chapter or page of a book.

The fixed and variable portions of the footnote and footnote reference designations along with the positional relationship thereof to the remainder of the line, are initially defined by the operator specifying or selecting choices from a menu at the beginning of the job of document preparation. These selections will remain in effect until changed. Operator tasks of specifying and defining designations will be brought out in greater detail later in the specification. For now though, it is sufficient to note that flexibility in specification and definition extends from only variable data to fixed and variable data positionally located.

Now it is to be assumed that an operator is keying to a word processing system having a display sufficiently large enough to display any one of the pages shown in Figures 1 through 3. Further it is to be assumed that body text has been keyed or input to the point of footnote reference numeral 1 in Figure 1. The keying of body text is to a body text frame 100 shown in Figure 4. At the point of footnote reference numeral 1, the operator calls for presentation or display of a footnote text frame 101 shown in Figure 5. This frame is for keying or inputting footnote text for footnote 1 in Figure 1. When the footnote text frame is called, the body text will be stored separately from the to-be-keyed footnote text. Upon completion of keying of the footnote text for footnote 1 in Figure 5, the operator recalls frame 100. At this time, the system will automatically store away the footnote text of frame 101 in a footnote library, recall frame 100, display the numeral 1 in frame 100, and await further operator keying of body text from the point of numeral 1 in frame 100.

Following keying to the point of footnote reference numeral 2 in Figure 6, the operator again calls for display of a footnote text frame. Footnote frame 102 shown in Figure 7 will be displayed for keying of the footnote text for footnote 2. Following the keying of footnote text for footnote 2 in frame 102, frame 100 is again recalled, and the numeral 2 is displayed in frame 100 (Figure 6).

Following input of any one of the documents having as a first page that represented in Figures 1 through 3, an assembly operation is required for merging the separately stored footnote and body text and for paginating the document for ultimate printing. A normal merge operation involves combining a portion of one document with another. A normal pagination operation is for dividing a document into page size segments capable of being printed on the paper being used. Such an operation generally involves inserting and deleting page end codes. The assembly operation contemplated herein for formatting a footnoted document requires far more than just separate merge and pagination operations. These operations must be performed in conjunction with one another in order to attain the desired results. There must be a balancing of the text and footnotes within a page.

For purposes of clarity, this balancing will be view briefly below from a conceptual, rather than actual or preferred standpoint. The preferred embodiment will be set out in the following detailed description section of this application. First, a page buffer is loaded from the top with body text to the point of the first footnote reference point. Then the corresponding footnote text is loaded from the top of a footnote section of the page buffer. The page buffer is defined by a specified number of lines. The footnote section is located at the bottom of the page buffer and is defined in terms of a maximum number of footnote lines. As such, the top of the buffer is a body text section and is indirectly defined in terms of a minimum number of lines. Footnote text is input to the footnote section beginning at the top thereof. If the text for the entire footnote will fit within the footnote section, operation continues from the point of the first footnote reference point with the loading of additional body text into the page buffer. If the footnote section is full, this operation continues until either the body text section is full or up to a line before a line containing another footnote reference. If the body text section can be filled without any additional footnote references, this is accomplished and operation begins for the next page of the document. If an additional footnote reference is encountered, operation terminates with the end of the preceding line and the page has been defined. This is even though the page will contain fewer lines than possible.

On the other hand, if the footnote section has additional lines available, additional lines of body text can be loaded into the page buffer. Whether this will occur will depend on both the number of lines remaining in the footnote section and whether the additional lines of body text loadable or to be loaded contain additional footnote references. If both an additional body text line containing a footnote reference and at least one line of the corresponding footnote text can be loaded into the page buffer, this will be effected. If additional lines of body text contain no footnote references and additional lines are available in the footnote section, the available lines are filled with body text and the footnote section is moved to the bottom of the page buffer. That is, as each line of body text is loaded into the footnote section, the footnote text is shifted down one line.

Detailed description

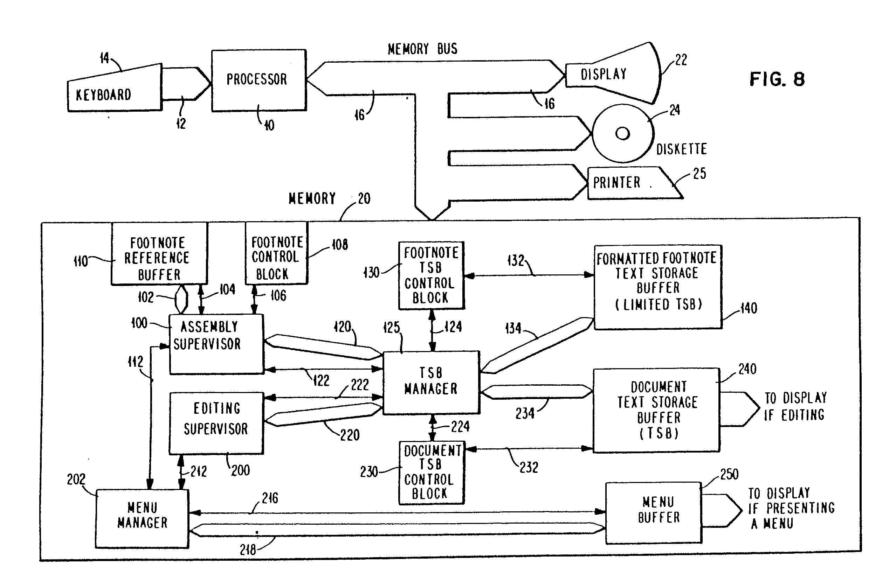

Refer next to Figure 8. In this figure is shown a portion of a text processing system, including a processor 10 to which is connected a bus 12 leading from a keyboard 14. Character data generated by manual actuation of keys on keyboard 14 causes character related signals to be applied to processor 10. Processor 10 provides an output memory bus 16 a data stream in which the characters selected by actuation of keyboard 14 appear suitably encoded.

Keyboard 14 is made up of a standard set of alpha/numeric graphic keys for keying characters, numbers, punctuation marks, and symbols, and also includes function and format control keys for causing and controlling a carriage return, indent tap, etc. In addition, the keyboard includes a second set of control keys for issuing special control commands to the system. These control keys are for controlling cursor movement, for setting the keyboard into a number of different modes, for use in conjunction with other keys for defining and controlling operations and other functions, etc.

Memory bus 16 extends to a memory unit 20 which is preferably a random access memory, to a display unit 22, to a diskette unit 24, and to a printer 25.

Included within memory unit 20 are two text storage buffers. One is a formatted footnote text storage buffer (TSB) 140 and the other a document TSB 240. The formatted footnote TSB 140 is used only by an assembly supervisor 100 when a limited footnote resolution algorithm is used to resolve and format footnotes at the bottom of a page. The document TSB 240 is used as a window into indefinite length text pages stored on a diskette readable by unit 24. Both assembly supervisor 100 and an editing supervisor 200 use the document TSB 240.

A footnote TSB control block 130 is linked to formatted footnote TSB 140 via a channel 132. A document TSB control block 230 is linked to document TSB 240 via a channel 232.

TSB manager 125 is linked by channels 124 and 224 to footnote TSB control block 130 and document TSB control block 230, respectively.

TSB manager 125 is linked by channels 134 and 234 to formatted footnote TSB 140 and document TSB 240, respectively. Editing supervisor 200 is linked via channels 220 and 222 to TSB manager 125. Editing supervisor 200 contains keystroke processing routines which are invoked based on the key pressed on keyboard 14.

In operation of the system of Figure 8, a body text encoded data stream applied along memory bus 16 is stored in document TSB 240. In the process of correcting and editing the contents of the body text in document TSB 240, selected portions or lines of a page are presented to the operator on display unit 22.

In addition to editing the contents of the body text, editing supervisor 200 may also create and revise footnotes within document TSB 240 in order that footnotes of indefinite length can be supported.

A menu manager 202 is linked via channels 112 and 212 to assembly supervisor 100 and editing supervisor 200, respectively, and is used when a menu is to be displayed. Menu manager 202 is linked via channels 216 and 218 to a menu buffer 250.

Assembly supervisor 100 is linked to TSB manager 125 via channels 120 and 122. Assembly supervisor 100 provides control routines necessary to execute an assembly operation for paginating and merging body text stored in document TSB 240 with formatted footnote text stored either in formatted footnote TSB 140 (if all of the formatted footnote text for the body text page will fit) or on a diskette.

Assembly supervisor 100 is linked to a footnote control block 108 via channel 106. Footnote control block 108 is used to store status information during the assembly operation for resolving and formatting footnotes.

Assembly supervisor 100 is linked to a footnote reference buffer 110 via channels 102 and 104. Footnote reference buffer 110 contains pointers to diskette stored footnote text which has not yet been placed at the bottom of a page or at the end of the document during the assembly operation.

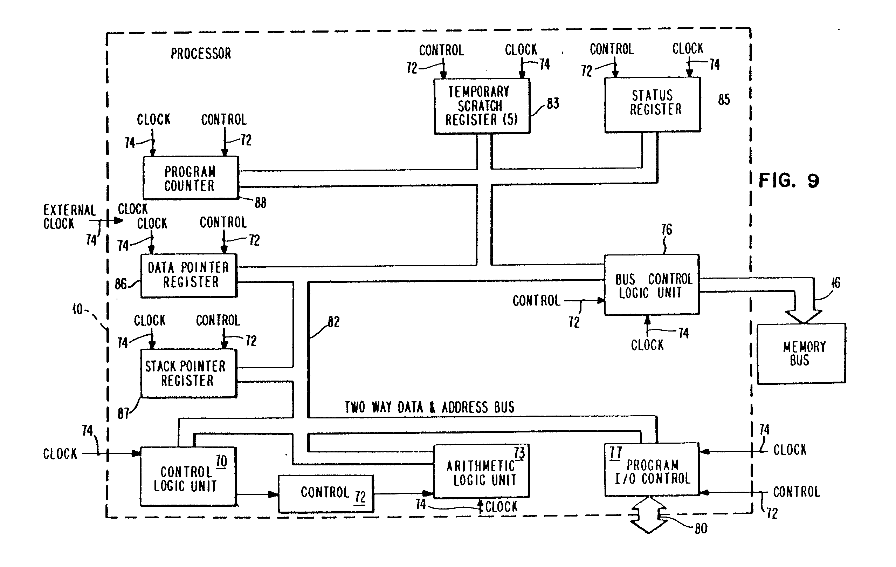

Refer next to Figure 9. In this figure are shown the details of processor 10 which is capable of performing the operations of this invention under program control. In practice, processor 10 includes an INTEL/8086 Microcomputer chip. Typical logic hardware elements forming processor 10 include a control logic unit 70 which responds to instructions from memory 20 on bus 16. The control logic unit 70 is also in the data stream identified by the data and address bus 82 interconnected to various other logic units of processor 10.

In response to instructions from random access memory 20, control logic unit 70 generates control signals to other logic elements of processor 10. These control signals are interconnected to the various elements by means of a control line 72 which is illustrated directly connected to an arithmetic logic unit 73 and identified as a "control" line 72 to other elements of processor 10. Synchronous operation of the control unit 70 with other logic elements of processor 10 is achieved by means of clock pulses input to processor 10 from an external clock surface on bus 74. This bus is also shown interconnected to various other logic elements of processor 10.

Data to be processed in processor 10 is input either through a bus control logic unit 76 or a program input/output control logic unit 77. The bus control logic 76 connects to random access memory 20 and receives instructions for processing data input to input/output control 77. Thus, input/output control 77 receives data from keyboard 14 while bus control logic 76 receives instructions from memory 20. Note that different storage sections of memory 20 are identifiable for instruction storage and data storage. Device controls from processor 10 are output through program input/output controller 77 over a data bus 80.

Input data on the data bus 16 is passed internally through processor 10 on the bus 82 to control unit 70. Arithmetic logic unit 73, in response to a control signal on line 72 and in accordance with instructions received on memory bus 16, performs arithmetic computations which may be stored in temporary scratch registers 83. Various other transfers of data between the arithmetic logic unit 73 and other logic elements of processor 10 are of course possible. Such additional transfers may be to a status register 85, data pointer register 86 or a stack pointer register 87. Also in the data stream for these various logic elements by means of the bus 82 is a program counter 88.

A particular operating sequence for processor 10 is determined by instructions on bus 16 and input data on the bus 16 or on bus 80 from keyboard 14. As an example, in response to received instructions, processor 10 transfers data stored in scratch registers 83 to one of register 86, 87, or 85. Such operations of processors as detailed in Figure 9 are considered to be well known and understood by one of ordinary skill in the data processing field. A detailed description of each of the operations of the processor of Figure 9 for the described invention would be counterproductive to an understanding of the invention as claimed.

Table 1 illustrates a routine used by processor 10 for soliciting operator input of footnote formatting information.

# 0 094 514

## TABLE 1
## FOOTNOTE FORMAT ROUTINE

```
BEGIN (FN FMT)
  INITIALIZE WORK SPACE AND CONTROL BLOCKS
  COPY CURRENT VALUE OF ALL MENU OPTIONS
  INITIALIZE DFD (DYNAMIC FRAME DESCRIPTOR) WITH
  MENU OPTION VALUES
  UNTIL MENU IS SUCCESSFULLY EXITED OR CANCELLED DO
    DISPLAY FOOTNOTE FORMAT MENU UNTIL MENU MANAGER
    RETURNS
    VALIDATE/COMPARE VALUES
    IF THE "CHANGE FOOTNOTE TYPING OPTIONS"
    DIRECTIVE OPTION WAS SELECTED THEN
      DISPLAY FOOTNOTE TYPING OPTIONS MENU AND SAVE
      OPERATOR INPUT FOR LEADING/TRAILING CHARACTERS
      AND "FOOTNOTE CONTINUED" TEXT
    ELSE
      IF A PARAMETER CONFLICT EXISTS THEN
        POST OPERATOR MESSAGE
      ELSE
        INDICATE FOOTNOTE FORMAT MENU HAS SUCCESSFULLY
        EXITED
      ENDIF
    ENDIF
  ENDDO
  FREE WORK SPACE
  RETURN
END TABLE 1 (FN FMT)
```

FOOTNOTE FORMAT

If a "Change Footnote Format" option is selected in a Format Selection menu presented to the operator for any number of tasks, then the system displays a Footnote Format menu as shown in MENU 1 below.

The Footnote Format is a part of both the Document and Alternate Document Format of the document. The Document and Alternate Document Format are two independent sets of formats which the operator may begin using at the top of any page in the document. Unless specified otherwise, the system defaults to the Document Format.

MENU 1

| Chg Document Fmt DSK001 | Brief | Ins Kyb 1 Pitch 12 |
| --- | --- | --- |

| | | FOOTNOTE FORMAT | |
| --- | --- | --- | --- |
| ID | ITEM | YOUR CHOICE | POSSIBLE CHOICES |
| a | Typestyle Number | | 1—31 (10 Pitch) 80—111 (12 Pitch) 154—175 (Proportional) 215—230 (15 Pitch) |
| b | Separator Character | — | Any available character |
| c | Number of Separator Characters | 20 | 1—450 |
| d | Maximum Number of Footnote Text Lines Per Page | 48 | 1—999 |
| e | Number of Lines Between Footnotes | 0 | 0—999 |
| f | Footnote Numbering | 1 | 1=Document 2=Page |
| g | Footnote Numbering Graphic | | Any available character, or none |
| h | Footnote Placement | 2 | 1=Document 2=Page |
| i | Change Footnote Typing Options | | |

When Finished with this menu, press ENTER.
Type ID letter to choose ITEM; press ENTER:

Each ITEM in MENU 1 is briefly described below.

Typestyle Number:
A plurality of choices of fonts including a variety of typestyles and pitches are available from MENU 1. Both typestyle and pitch are determined by a Font ID selected by the operator from POSSIBLE CHOICES. If no ID is specified, the system will use a Line Format typestyle default value.

Separator Character:
Any graphic character available on a selected font can be specified or selected by the operator to form a separator line separating body and footnote text.

Number of Separator Characters:
The operator can specify the number of characters to be used in making up the separator line. The number will only be measure limited. It is to be noted that a blank line will always precede and follow the separator line.

Maximum Number of Footnote Text Lines per Page:
The number specified by the operator will be the maximum number of lines available at the bottom of the page for footnote text. Included with this number will be a specified number of lines between footnotes. Not included in the specified number are the blank lines before and following the separator line, the

**0 094 514**

separator line, and a dedicated line at the bottom of the page. Although not included in the maximum number of footnote text lines, these lines are included in the total page line count.

Number of Lines Between Footnotes:
The operator can specify the interfootnote line spacing for formatting purposes to improve aesthetics. Footnote text will always be single spaced.

Footnote Numbering:
An operator can specify whether or not footnote numbering is to be reset at page boundaries.

Footnote Numbering Graphic:
If footnote numbering is to be reset at page boundaries and a non-numeric graphic character such as an asterisk is specified, the first footnote will be numbered "*", the second will be numbered "**", etc.

Footnote Placement:
The operator can specify whether or not footnotes are formatted and placed at the bottom of each page or the end of the document. Range: 1=Yes 2=No
Following selections from MENU 1 and depression of the ENTER key, a Footnote Typing Options Format menu will be presented to the operator. This is illustrated below as MENU 2 wherein choices are available for the fixed portion of both footnote and footnote reference designations. The type of the variable portions of the footnote and footnote reference designations is selected from MENU 1.

MENU 2

| Chg Document Fmt DSK001 | Brief | Ins Kyb 1 Pitch 12 |
|---|---|---|
| | FOOTNOTE TYPING OPTIONS | |
| ID      ITEM | YOUR CHOICE | POSSIBLE CHOICES |
| For Body Text: | | |
| a   Leading Characters | "1/2 INX UP" | Up to 8 characters, or none |
| b   Trailing Characters | "1/2 INX DOWN" | " |
| For Footnote Text: | | |
| c   Leading Characters | "1/2 INX UP" | " |
| d   Trailing Characters | "1/2 INX DOWN" | " |
| e   'Continued Footnote' Message Characters | (Footnote Continued) | |

When finished with this menu, press ENTER.
Type ID letter to choose ITEM; press ENTER:

An explanation of each ITEM listed in MENU 2 is set out below.

Leading Characters:
These characters include both controls and graphics to be generated by the system immediately before the variable portion of the footnote and footnote reference designation both in body and footnote text.

Trailing Characters:
These characters include both controls and graphics to be generated by the system immediately after the variable portion of the footnote and footnote reference designation both in body and footnote text.

'Continued Footnote' Message Characters:
Any character, tab, indent tab, space, required space, required backspace, or word underscore can be selected for system placement 1) following the last footnote line on a page, and 2) before the first footnote line on the next page when a footnote "spills over" from one page to the next.

9

When the operator completes entry of all desired choices and depresses the Enter key against a prompt to type the ID to choose an item displayed on the Prompt Line, the system will update the Document or Alternate Format of the document with the values selected by the operator and re-display the Format Selection menu.

Following the above set up routine, the operator is now ready to begin preparing a footnoted document.

Footnotes are created during the normal Create/Revise Document task via a Footnote instruction. When the operator selects "Footnote" from an Instruction Menu and depresses the Enter key, a Footnote Menu illustrated below as MENU 3 will be presented.

MENU 3

| Create Document | Brief | | Ins | |
|---|---|---|---|---|
| DISK01 | | Pg. 1 | Ln.13 Kyb 1 | |

| ID | ITEM | FOOTNOTE YOUR CHOICE | POSSIBLE CHOICES |
|---|---|---|---|
| a | Create/Revise Footnote Text | 1 | 1=Yes 2=No |
| b | Reset Footnote Number or Character | | |
| c | Document Name | | |
| d | Diskette Name | | |
| e | System Page Number | | |

When finished with this menu, press ENTER.
Type ID letter to choose ITEM; press ENTER:

The ITEMS against which the operator makes choices are described below.

Create or Revise Footnote Text:
Operator selection here is for calling a blank Footnote Typing Frame illustrated as FRAME 1 later herein if typing a new footnote is in order, or a Footnote Typing Frame with an existing footnote as illustrated in FRAME 2 later herein in order for the operator to make revisions.

Reset Footnote Number or Character:
This option is selected whenever the operator desired to override the automatic system-generated sequence of footnote numbering or designations (i.e., 1, 2, 3,. . .) by specifying a specific number or other graphic character or characters.
If a number is entered, then footnote numbering by the system will be reset to that value. If a graphic is entered, then the automatic sequencing of numeric values will be suspended until the next "null" or numeric value is encountered.
The following two items should only be selected if footnotes are to be stored in a document other than the editing document.

Document Name:
Selection here is to 1) store footnote text to be created, 2) locate footnote text to be revised, or 3) locate existing footnote text to be included in the document.

Diskette Name:
The name of the diskette on which the above document resides is entered by the operator.

System Page Number:
An entry here is for calling a page which contains the footnote text. If both the Document Name and Diskette Name are blank, then the system will assume that footnote text is to be stored with the document being created or edited. The system will store the footnote text on the next available page on or above 9000 (i.e., 9000, 9000.0.1, 9000.0.2, . . .) and after existing footnote pages.
If the operator specifies another Document Name/Diskette Name, then any page number of that document may be used to store the footnote text. If no page number is specified, then the first available page will be used. The operator may also specify that a particular existing page number be used by selecting this ITEM and entering the page number.

The Footnote Instruction thus created in memory will have the following makeup:

1) Footnote Reference Control (FTR) followed by the following controls:
2) Begin Formatted Text Control (BFT)
3) Leading characters
4) Footnote number
5) Trailing characters
6) End Formatted Text Control (EFT)

The BFT/EFT control pair is used by the system to identify data that was generated by the system and may be later updated or modified by the system.

The value of the footnote number itself may be:

1) Sequentially assigned by the system when the footnote instruction is created (and prior to assembly for merging and paginating the footnote and body text).
2) Explicitly assigned by the operator when the footnote instruction is created.
3) Determined by the system during the assembly operation.

As a result, a footnote number (together with any leading and/or trailing characters) will always appear in the body text after a footnote instruction is created.

Upon revising a footnote instruction, the Footnote Instruction can be altered by placing the cursor on the Footnote Instruction and pressing the Enter key. The Footnote Menu (MENU 3) will be recalled.

During creation or revision of footnote text, if "Create or Revise Footnote Text" is set to "Yes" in the Footnote Menu (MENU 3), a Footnote Typing Frame (Frames 1 and 2) will be displayed when the ENTER key is depressed.

FRAME 1
(Footnote Typing Frame—Create)

| Create Footnote | Brief | Ins | | | |
|---|---|---|---|---|---|
| DISK01 | Pg. 1 | Ln. 13 | Kyb 1 | Pitch 12 | |

When finished, press ENTER.

FRAME 2
(Footnote Typing Frame—Revise)

Revise Footnote
DISK01

J. J. Vreeland, What to Look for When You Review Programming Documents for Product Usability, Technical Report TR03.124 (December, 1980); may be obtained from the IBM Corporation, Santa Teresa Laboratory, 555 Baily Avenue, P. O. Box 50020, San Jose, CA 95150.

When finished, press ENTER.

The format of the footnote text and the page presentation characteristics for footnotes are determined by the Document or Alternate Format and the Footnote Format. After the footnote and body text have been assembled, the footnote text will always be single spaced regardless of the line spacing of the body text.

The Context Field on the First Status Line of the Footnote Typing Frames will display either "Create Footnote" or "Revise Footnote", as appropriate.

In order to create a reference to an already existing footnote, operator procedure is to specify the diskette name, document name, and page number for the footnote and set "Create or Revise Footnote Text" to "No" in the Footnote Menu (MENU 3). After the operator has specified the document name and diskette name the first time a footnote was included, the default will be the previous document and diskette name used.

During document assembly, body text and footnote text are resolved. Resolution requires combined pagination and merge operations if both body and footnote text are to appear on the same page.

Footnote text is formatted for output to a display for review or to a printer by either a Paginate Document task, a Merge task, or a Paginate/Hyphenate option of a Check Document task. The Paginate Document task will assemble the document to permit the operator to view the pages of the document made up of body and footnote text exactly as it will be printed.

The makeup of the footnote text at the bottom of the page will be:

Begin Formatted Text Control (BFT)

Line Format Change (to set footnote format)

Begin Keep Control

Required Carrier Return (for blank line above separator line)

Separator line, Required Carrier Return

Required Carrier Return (for blank line below separator line)

Footnote Text

Line Format Change (to return to format prior to footnote)

"n" number of indent tabs (where "n" is determined from the indent level at the Begin Formatted Text control).

End Keep Control

End Formatted Text Control (EFT)

The footnote reference number or other designation in the body text will be used to determine the footnote number or other designation to be printed and displayed. The system will automatically insert footnote designations together with any leading and trailing characters at the beginning of the footnotes automatically during assembly only.

Ordinarily, the system will assign footnote numbers in sequential order. However, if the operator has specified that a particular number be used, the system will assign that number to the footnote, and subsequent system assigned numbers will be determined using that number as a base.

Automatic sequencing may be interrupted by the presence of non-numeric footnote reference designations. The next numeric footnote reference will resume the automatic sequencing by the system.

If footnotes are inserted, moved, or deleted from the assembled document, then the document must be reassembled to renumber the footnotes.

Table 2 describes the routine performed by the assembly supervisor 100. This is the main routine that controls the pagination and merge operations.

This main routine (DOCPA) invokes other routines to adjust lines, make page ending decisions, and process, format, and renumber footnotes.

## TABLE 2

```
BEGIN (DOCPA)
    OBTAIN FORMATTING INFORMATION FOR DOCUMENT
    INITIALIZE CONTROL BLOCKS AND WORK AREAS
    GO TO STARTING PAGE
    IF PRESERVE PAGE ENDINGS IS NOT INDICATED THEN
        UNTIL END OF DOCUMENT OR CANCEL PRESSED DO
            IF READJUSTING LINE AND A FOOTNOTE WAS
            ENCOUNTERED ON THAT LINE THEN
                INVOKE (FNNUM)—UPDATE/INSERT FOOTNOTE
                NUMBER IN BODY TEXT
            ENDIF
            IF SPELL-ASSISTED HYPHENATION IS ON THEN
                PERFORM SPELLING-ASSISTED HYPHENATION WITH
                LINE ADJUST
            ELSE
                PERFORM LINE ADJUST
            ENDIF
            IF THE LINE IS NOT TO BE READJUSTED THEN
                CALL (LINEPOS) TO DETERMINE IF LINE POSITION
                CAUSES A PAGE END DECISION
                IF PAGE END DECISION THEN
                    DETERMINE LOCATION OF PAGE END
                ELSE
                    IF LINE END CODE IS A PE OR RPE THEN
                        INDICATE PAGE END DECISION
                    ENDIF
                ENDIF
                IF PAGE END DECISION THEN
                    CALL (PAGEEND) TO INSERT A PAGE END AND
                    INCREMENT THE POINT OF OPERATION TO NEXT
                    PAGE
                ELSE
                    INCREMENT PAST LINE END CODE
                ENDIF
            ENDIF
        ENDDO
        INVOKE (EDOC)—FOOTNOTE END OF DOCUMENT
        PROCESSOR
    ENDIF
    CLEANUP AFTER TERMINATING PAGINATE
    CLEANUP FOOTNOTE PROCESSING
    FREE WORK AREAS
    END TALE 2 (DOCPA) RETURN TO CALLER
```

Table 3 describes a subroutine (LINEPOS) of the routine DOCPA. This subroutine calculates the positional change caused by line ending codes. The paginator (DOCPA) uses this information in determining where to make page ending decisions. The subroutine (LINEPOS) also invokes a routine (RSOLVE) to fetch and resolve footnote text.

TABLE 3

```
BGNPROC (LINEPOS)
    DETERMINE LINE POSITION CHANGE
    IF THE LINE END CAUSES THE LINE POSITION TO CHANGE
    THEN UPDATE THE LINE POSITION CHANGE BY THE LINE
    SPACING
        SAVE LINE SPACING
    ENDIF
    OBTAIN THE LINE DENSITY FOR 1 LINE
    SAVE THE LINE DENSITY FOR THE LINE SPACING
    CALCULATE AND SAVE THE LINE POSITION CHANGE AT THE
    END OF THE LINE
    IF A FOOTNOTE REFERENCE WAS ENCOUNTERED ON THE
    LINE THEN
        INVOKE (RSOLVE)—RESOLVE FOOTNOTE INTO THE
        FOOTNOTE BUFFER
        ENDIF
        IF FOOTNOTE ROUTINE WANTS PAGE END DECISION THEN
            SET PAGE END DECISION
        ENDIF
    ADD LINE POSITION ESCAPEMENTS TO PENDING FOOTNOTE
    ESCAPEMENTS
    DETERMINE NUMBER OF LINES FROM BOTTOM OF PAGE
    DETERMINE NEW LINE POSITION
ENDPROC TABLE 3 LINEPOS
```

Table 4 describes a subroutine (PAGEEND) of the routine DOCPA that makes page ending decisions by inserting a page end code into the document TSB 240. Prior to inserting the page end code, the subroutine (PAGEEND) invokes a routine (EPAG) to process and insert all footnote text accumulated in the formatted footnote TSB 140 or stored on diskette unit 24 into document TSB 240.

TABLE 4

```
BGNPROC PAGEEND
    IF THERE IS PENDING FOOTNOTE TEXT THEN
        INVOKE (EPAG)—FOOTNOTE END OF PAGE PROCESSOR
    ENDIF
    IF NOT A PAGE END CODE THEN
        INSERT THE PAGE END CODE
    ELSE
        MOVE ACROSS PAGE END
        EXIT IF END OF TEXT PAGES
        MOVE TO START OF TEXT ON NEXT PAGE
    ENDIF
    IF PRINT INDICATED THEN
        PRINT PAGE
    ENDIF
ENDPROC TABLE 4 PAGEEND
```

Table 5 describes the routine (FNNUM) which determines the type of footnote numbering or designations to be used and when to reset and/or increment the numbering or designations.

TABLE 5

```
BEGIN (FNNUM)
  IF FOOTNOTE REFERENCE RESETS THE FOOTNOTE NUMBERING
  THEN
    RESET THE FOOTNOTE COUNTER TO THE SPECIFIED VALUE
    INSERT THE COUNTER INTO THE BODY TEXT
  ELSE
    IF THIS IS THE FIRST FOOTNOTE OF THE DOCUMENT AND
    NUMBERING IS NOT BEING DONE ON A PER PAGE BASIS
    THEN
    SET THE FOOTNOTE COUNTER TO 1
    INSERT THE COUNTER INTO THE BODY TEXT
  ELSE
    INCREMENT THE FOOTNOTE COUNTER
    IF THIS IS THE FIRST FOOTNOTE OF A PAGE AND
    NUMBERING IS BEING DONE ON A PER PAGE BASIS THEN
      SET THE FOOTNOTE COUNTER TO 1
    ENDIF
    IF FOOTNOTE GRAPHIC NUMBER IS NOT SPECIFIED THEN
      INSERT THE COUNTER INTO THE BODY TEXT
    ELSE
      SET I=FOOTNOTE COUNTER
      DO UNTIL I=0
        INSERT FOOTNOTE GRAPHIC
        I=I-1
      ENDDO
    ENDIF
  ENDIF
  ENDIF
END TABLE 5 (FNNUM)
```

The routine RSOLVE in Table 6 is invoked by the paginator routine (DOCPA) if the footnote placement is specified to be "bottom of page" not "bottom of document". If the footnote placement is specified to be "bottom of document", then resolution occurs in the routine EDOC. Its function is to resolve one or more footnote reference controls that the paginator encountered after adjusting the cursored body text line during document pagination. Note that the paginator (DOCPA) invokes this routine only after completing the line adjustment of the cursored line and additionally determining that the cursored line will fit on the current page. This routine:

a) insures that the footnote format values are in a range that will enable feasible resolution. These include the maximum number of footnote text lines, and the number of blank lines between footnotes,

b) determines whether the current page is to be terminated prematurely. This occurs when the first footnote text line for the footnote reference that is being processed will not appear on the same page as its reference. This usually occurs when there is enough footnote text pending such that the maximum number of footnote text lines is surpassed,

c) resolves the footnote references encountered on the current line via the invocation of routine GETFN to fetch and resolve each footnote reference.

TABLE 6

```
BEGIN (RSOLVE)
    IF THERE ARE FOOTNOTES TO RESOLVE FOR THE CURRENT
    LINE THEN
        IF AT LEAST ONE MORE FOOTNOTE TEXT LINE WILL FIT
        AT THE BOTTOM OF THE CURRENT PAGE BEING
        PAGINATED THEN
            IF THE RESOLUTION ALGORITHM TO BE USED IS THE
            LIMITED TSB ALGORITHM THEN
                INITIALIZE THE FORMATTED FOOTNOTE LIMITED TSB
                INVOKE GETFN—RESOLVE/FORMAT FOOTNOTES ON
                THIS LINE
                IF THE FORMATTED FOOTNOTE LIMITED TSB BECAME
                FULL THEN
                    RESTORE POINT OF OPERATION TO THE FIRST
                    FOOTNOTE OF THIS PAGE
                    RE-INITIALIZE PARAMETERS FOR THE FIRST
                    FOOTNOTE OF THIS PAGE
                    INVOKE GETFN—RESOLVE/FORMAT FOOTNOTES ON
                    THIS LINE USING INDEFINITE LENGTH ALGORITHM
                ENDIF
            ELSE
                INVOKE GETFN—RESOLVE/FORMAT FOOTNOTES ON
                THIS LINE USING THE INDEFINITE LENGTH
                ALGORITHM
            ENDIF
        ELSE
            INDICATE PREMATURE PAGE TERMINATION DUE TO
            INSUFFICIENT ROOM AT THE BOTTOM OF THE PAGE FOR
            ONE MORE FOOTNOTE TEXT LINE
        ENDIF
    ENDIF
    RETURN
END TABLE 6 (RSOLVE)
```

The routine GETFN in Table 7 is invoked by the routine RSOLVE to perform the actual resolution of footnote references. Its function is to resolve each footnote reference control that the paginator encountered after adjusting the cursored body text line. It is already assumed that there is room at the bottom of the page for at least one more footnote text line and that the footnote placement is the bottom of page, not bottom of document.

Resolution is performed one of two ways:

If all of the footnotes on a page can be copied and formatted into the formatted footnote TSB (140), then the limited footnote algorithm is used. This method does a minimal amount of diskette accessing and performs almost all processing in memory. The result is fast formatting and resolution of each footnote reference since all of the formatted footnotes will be in memory when the routine EPAG is called at the end of the page to insert the footnotes at the bottom of the page.

This method is used most of the time for footnote placement at the bottom of a page unless very large footnotes are being processed.

If not all of the footnotes on a page will fit into the formatted footnote TSB 140, then the indefinite footnote algorithm is used. This involves storing the current body text page back into the diskette unit 24 and moving the TSB point of operation to the page that contains the footnote text to be formatted and resolved (even if the page is in another document). Once the footnote is formatted it is stored back onto the diskette and the TSB point of operation is moved back to its original point in the body text page. With this approach the routine EPAG will fetch the footnote text from diskette unit 24 to the bottom of the page.

Resolution typically involves the following items:

Formatting the footnote text based on the active footnote format. This implies that the Document or Alternate Document Format (whichever is active) will be scanned in order to obtain the parameters required to format the footnote text correctly.

Inserting the appropriate footnote number bracketed within a BFT/EFT control sequence with the appropriate leading/trailing text and/or controls prior to the footnote text.

Calculating the number of footnote text lines corresponding to the footnote reference being processed.

Updating the number of pending footnotes on the current line to be inserted.

Calculating the total vertical escapement due to footnote text that is to be inserted at the bottom of the page. This value is used by the paginator in its page ending decision logic.

16

TABLE 7

```
BEGIN
  OBTAIN ADDRESSABILITY TO THE FIRST FOOTNOTE
  REFERENCE TO BE RESOLVED
  UNTIL THERE ARE NO MORE FOOTNOTES TO BE RESOLVED DO
    IF PERFORMING LIMITED RESOLUTION AND BLANK LINES
    MUST BE INSERTED TO DELIMIT THIS FOOTNOTE THEN
      INSERT THE BLANK LINES VIA PROGRAM SEGMENT
      BLANK_LN
    ENDIF
    COPY THE FOOTNOTE TEXT INTO THE LIMITED TSB AND
    DETERMINE THE NUMBER OF FOOTNOTE TEXT LINES VIA
    THE PROGRAM SEGMENT COPY_FN
    IF PERFORMING LIMITED RESOLUTION AND THE ENTRY
    COULD NOT BE RESOLVED SUCCESSFULLY THEN
      INSERT INTO THE LIMITED TSB THE APPROPRIATE
      ERROR MESSAGE
    ENDIF
    OBTAIN THE NUMBER OF LINES FOR THIS FOOTNOTE
    REFERENCE
    CALCULATE THE VERTICAL ESCAPEMENT THAT WILL BE
    GENERATED FOR THE FOOTNOTE TEXT LINES
    CORRESPONDING TO THIS FOOTNOTE REFERENCE
    UPDATE THE TOTAL VERTICAL ESCAPEMENTS FOR ALL
    FOOTNOTES ON THIS PAGE
    SETUP TO PROCESS THE NEXT FOOTNOTE
  ENDDO
  UPDATE THE ESCAPEMENT VALUES FOR THE PAGINATOR VIA
  PROGRAM SEGMENT UPDATE
  SET AN APPROPRIATE EXIT RETURN CODE
  RETURN .
BEGSEG (BLANK_LN)
  DETERMINE HOW MANY BLANK LINES MUST BE INSERTED TO
  PROVIDE FOOTNOTE SPACING
  IF THE PREVIOUS FOOTNOTE DID NOT END WITH A LINE
  ENDING CONTROL THEN
    INSERT A REQUIRED CARRIER RETURN TO FORCE THE
    POINT OF INSERTION FOR THE BLANK DELIMITER LINES
    TO THE START OF A LINE
  ENDIF
  UNTIL ALL THE BLANK LINES ARE INSERTED INTO THE
  LIMITED TSB BUFFER DO
    INSERT A REQUIRED CARRIER RETURN PRIOR TO THE
    POINT OF OPERATION
  ENDDO
ENDSEG (BLANK_LN)
BEGSEG (COPY_FN)
  IF PERFORMING LIMITED FOOTNOTE ALGORITHM RESOLUTION
    THEN COPY THE FOOTNOTE TEXT INTO THE FORMATTED
    FOOTNOTE LIMITED TSB
  ELSE
    GO TO THE FOOTNOTE PAGE VIA THE INDEFINITE LENGTH
    DOCUMENT TSB BY MOVING THE TEXT STORAGE BUFFER
    POINT OF OPERATION TO THE DESIRED FOOTNOTE PAGE
  ENDIF
  INSERT THE FOOTNOTE NUMBER SEQUENCE PRIOR TO THE
  FOOTNOTE TEXT
  SETUP A COUNTER THAT WILL KEEP TRACK OF THE NUMBER
  OF FOOTNOTE TEXT LINES FOR THE FOOTNOTE REFERENCE
  CONTROL
  UNTIL THE END OF THE FOOTNOTE TEXT IS FOUND DO
    ADJUST THE FOOTNOTE TEXT LINE BETWEEN THE LEFT AND
    RIGHT MARGINS
    INCREMENT THE COUNTER THAT IS KEEPING TRACK OF THE
    NUMBER OF FOOTNOTE TEXT LINES
```

TABLE 7 (continued)

```
ENDDO
IF THERE ARE NO LINES IN THE FOOTNOTE TEXT PAGE THEN
    INSERT A REQUIRED CARRIER RETURN
    SET THE NUMBER OF LINES FOR THIS ENTRY TO 1
ENDIF
SAVE THE NUMBER OF TEXT LINES CALCULATED IN THE
ENTRY'S LINE COUNT FIELD
IF NOT PERFORMING LIMITED TSB MODE RESOLUTION THEN
    IF THE FOOTNOTE TEXT PAGE'S PAGE ENDING CONTROL IS
    NOT AT THE START OF A LINE THEN
        INSERT A REQUIRED CARRIER RETURN PRIOR TO THE
        PAGE END CONTROL
    ENDIF
    MOVE THE POINT OF OPERATION TO THE START OF THE
    FOOTNOTE TEXT PAGE
    DELETE THE FOOTNOTE NUMBER SEQUENCE. THE ROUTINE
    EPAGE WILL INSERT LATER
    STORE THE FORMATTED FOOTNOTE TEXT PAGE BACK TO THE
    FOOTNOTE DISKETTE
ENDIF
ENDSEG (COPY_FN)
BEGSEG (UPDATE)
    DETERINE THE MAXIMUM NUMBER OF FOOTNOTE TEXT LINES
    THAT MAY BE INSERTED IN A PAGE
    IF THE NUMBER OF AVAILABLE LINES TO INSERT IS
    GREATER THAN THE MAXIMUM NUMBER OF FOOTNOTE TEXT
    LINES THAT MAY BE INSERTED IN A PAGE THEN
        SET THE NUMBER OF AVAILABLE LINES TO INSERT EQUAL
        TO THE MAXIMUM NUMBER OF FOOTNOTE TEXT LINES THAT
        MAY BE INSERTED IN A PAGE
    ENDIF
    UPDATE THE NEW VALUE FOR NUMBER OF TEXT LINES TO
    INSERT
    UPDATE THE NEW VALUE FOR ESCAPEMENT DUE TO TEXT
    LINES THAT ARE TO BE INSERTED
    INSURE THAT THE CALCULATED ESCAPEMENT WILL ALL FIT
    IN THE CURRENT PAGE. ADJUST VALUE IF THE ESCAPEMENT
    IS TOO MUCH
ENDSEG (UPDATE)
END (GETFN)
```

The purpose of the routine EPAG in Table 8 is to move FORMATTED footnote text to the end of the current page. The footnote text resides either in the formatted footnote TSB 140 (if the limited algorithm is used) or on pages in the footnote library (in a separate document or on page 9000 or above if in the same document).

Upon invocation, a page end decision has been made by the paginator and the TSB point of operation is at the start of a line. This line will be forced to the next page via the insertion of a page end control, but before the page end control is inserted, this routine must insert (prior to the TSB point of operation) the appropriate number of formatted footnote text lines along with all the necessary formatting controls. All the information required for these insertions is available in the footnote control block 108 and footnote reference buffer 110.

After determining how many lines it must insert, this routine inserts the necessary formatting controls to precede the footnote text, the separator line, and the formatting controls to following the footnote text.

After the formatting controls are inserted, this routine either fetches all of the formatted footnote text from the formatted footnote TSB 140 (if the limited algorithm was able to be used) or (if the indefinite length algorithm had to be used) then it fetches in the footnote text for the first footnote. The footnote's respective entry in the footnote reference buffer 110 contains the pointers to each footnote text page. Note that the footnote reference buffer 110 causes the systems to have an "internal resolution limit" of about 20 footnotes per page if each footnote is stored in a separate document and up to 142 footnotes per page if each footnote is stored on page 9000 or above of the same document that contains the body text with the corresponding footnote references.

If necessary, lines that have been inserted in the previous page will be deleted after the entire footnote text is fetched.

If the entire footnote fits and more footnote text is pending, the insertion sequence will continue with the next footnote.

If the entire footnote won't fit, then the footnote text that won't fit will be deleted. These lines will appear on the next page.

After the insertion is complete, the necessary pointers in the footnote resolution control block 108 are updated. The footnote resolution buffer will also be updated to reflect the insertions.

TABLE 8

```
BEGIN
    MODIFY THE VERTICAL ESCAPEMENT DUE TO PENDING
    FOOTNOTE TEXT LINES THAT ARE TO BE INSERTED AT THE
    BOTTOM OF THIS CURRENT PAGE DUE TO ANY "WIDOW" OR
    "ORPHAN" LINE DECISIONS MADE BY THE PAGINATOR
    IF IT HAS BEEN DETERMINED THAT THERE ARE FORMATTED
    FOOTNOTE TEXT LINES TO INSERT AT THE BOTTOM OF THIS
    CURRENT PAGE THEN
        SAVE THE CURRENT PAGE END LOCATION
        INSERT PRIOR TO THE CURRENT POINT OF OPERATION THE
        FOOTNOTE TEXT FORMATTING SEQUENCE THAT WILL
        ENCAPSULATE THE PENDING FOOTNOTE TEXT
        IF PERFORMING LIMITED MODE TSB ALGORITHM THEN
            INSERT THE PENDING FOOTNOTE TEXT VIA PROGRAM
            SEGMENT LIMITED
        ELSE
            INSERT THE PENDING FOOTNOTE TEXT VIA PROGRAM
            SEGMENT INDEF
        ENDIF
        RESTORE POINT OF OPERATION TO PAGE END LOCATION
    ENDIF
    RETURN
    BEGSEG (LIMITED)
        OBTAIN THE VERTICAL ESCAPEMENT OF THE FOOTNOTE TEXT
        LINES TO BE INSERTED
        IF THE INTERNAL RESOLUTION LIMIT HAS NOT BEEN
        REACHED AND ALL OF THE PENDING FOOTNOTE TEXT WILL
        FIT THEN
            INSERT ALL OF THE PENDING FOOTNOTE TEXT
        ELSE
            ADVANCE TO THE TOP OF THE LIMITED TSB BUFFER
            MOVE THE POINT OF OPERATION TO THE END OF THE LAST
            FOOTNOTE LINE THAT IS TO BE COPIED
            INSERT INTO PAGE THE FOOTNOTE TEXT THAT IS BOUNDED
            BY THE TOP OF LIMITED TSB BUFFER AND THE POINT OF
            OPERATION
        ENDIF
        UPDATE THE FOOTNOTE CONTROL BLOCK AND FOOTNOTE
        REFERENCE BUFFER TO REFLECT THE NUMBER OF FOOTNOTE
        TEXT LINES INSERTED
    ENDSEG (LIMITED)
    BEGSEG
        OBTAIN THE VERTICAL ESCAPEMENT DUE TO FOOTNOTE TEXT
        LINES THAT ARE TO BE INSERTED
        OBTAIN THE OFFSET TO THE FIRST FOOTNOTE ENTRY IN
        THE FOOTNOTE RESOLUTION BUFFER
        SETUP A COUNTER FOR THE NUMBER OF LINES INSERTED
        UNTIL ALL THE FOOTNOTE TEXT LINES THAT ARE TO APPEAR
        ON THIS PAGE ARE INSERTED DO
            IF THE FOOTNOTE REFERENCE WAS RESOLVED
            SUCCESSFULLY THEN
                INSERT THE FOOTNOTE TEXT
            ELSE
                INSERT INTO TEXT THE APPROPRIATE FOOTNOTE
                RESOLUTION ERROR MESSAGE
            ENDIF
            ADD TO THE COUNTER KEEPING TRACK OF HOW MANY LINES
```

# 0 094 514

TABLE 8 (continued)

```
HAVE BEEN INSERTED THE NUMBER OF INSERTED LINES
FOR THIS FOOTNOTE
SUBTRACT FROM THE COUNTER KEEPING TRACK OF HOW
MUCH ESCAPEMENT REMAINS TO BE INSERTED BY THE
INSERTED ESCAPEMENT
IF THERE IS STILL MORE ROOM FOR FOOTNOTE TEXT THEN
    DETERMINE THE NUMBER OF BLANK LINES TO INSERT
    FOR FOOTNOTE SPACING
    DETERMINE THE ESCAPEMENT DUE TO THESE BLANK
    LINES
    IF THERE IS ROOM FOR THESE BLANK LINES THEN
        ADJUST THE INSERTION ESCAPEMENT COUNTER
        ACCORDINGLY
        ADJUST THE INSERTION LINE COUNTER ACCORDINGLY
        INSERT THE BLANK LINES INTO TEXT
        SETUP TO PROCESS THE NEXT FOOTNOTE
    ELSE
        INDICATE THAT NO MORE FOOTNOTE TEXT CAN BE
        INSERTED
    ENDIF
ENDIF
ENDDO
UPDATE THE FOOTNOTE CONTROL BLOCK AND FOOTNOTE
REFERENCE BUFFER TO REFLECT THE NUMBER OF FOOTNOTE
TEXT LINES INSERTED
IF THERE WILL BE NO FOOTNOTE TEXT LINES FLOWING TO
THE NEXT PAGE AND SYSTEM IS PERFORMING REGULAR
RESOLUTION THEN
    STOP USING THE INDEFINITE ALGORITHM SO THAT THE
    LIMITED ALGORITHM WILL BE USED ON THE NEXT PAGE
ENDIF
ENDSET (INDEF)
END (EPAG)
```

TABLE 9

```
BEGIN (EDOC)
    IF FOOTNOTES ARE BEING PLACED AT THE END OF THE
    DOCUMENT AND THE END OF THE DOCUMENT HAS BEEN
    REACHED AND NO FOOTNOTE TEXT HAS BEEN RESOLVED THEN
        OBTAIN POINTER TO THE FOOTNOTE REFERENCE BUFFER
        CONTAINING POINTERS TO EVERY FOOTNOTE FOUND IN THE
        DOCUMENT
        UNTIL THE LAST REFERENCE HAS BEEN RESOLVED DO
            FETCH FOOTNOTE TEXT
            INSERT THE NUMBER OF BLANK LINES AS SPECIFIED BY
            THE "NUMBER OF BLANK LINES BETWEEN FOOTNOTES"
            PARAMETER
        ENDDO
    ENDIF
END TABLE 9 (EDOC)
```

## Claims

1. A method of causing footnotes and footnote references to be designated during processing of a footnoted document in a word processing system comprising a keyboard (14), a display (22), a processor (10) and a memory (20), said processing consisting in preparing the body text and the footnote text with the help of said keyboard and display, and separately storing said footnote text and body text in said memory; said method being characterized by the following steps which are performed for a footnote to be entered:

displaying a menu on said display, giving the operator the specifications enabling the variable portion of the designation for said footnote and the corresponding footnote reference to be defined,

inputting into the system by means of said keyboard, a beginning designation of a character category for said variable portion, for designating a set of footnotes, and

changing automatically by said processor, the designations to be applied to subsequent footnotes, such that each set of footnotes will be distinctively designated upon combination of separately stored footnote text and body text during assembly of the footnoted document.

2. The method according to claim 1 characterized in that the category for said variable portion includes either a numeric or other graphic character.

3. The method according to claim 2 characterized in that it includes causing said set to be designated with numbers of said other graphic characters corresponding to said beginning designation when said other graphic character category has been selected.

4. The method according to claim 2 characterized in that it includes causing said set to be designated with a selected number as beginning designation when a numeric category has been selected.

5. The method according to claim 3 including adding one graphic character to each succeeding designation for said footnotes and footnote references when said other graphic character category has been selected.

6. The method according to any one of claims 1 to 5 characterized in that it includes selecting an indexed position for said designations and causing said designations to designate said footnotes and footnote references in an indexed position.

7. The method according to any one of claims 1 to 6 characterized in that it includes defining a fixed portion of said designation by selecting a character to accompany said variable portion and causing said character to accompany said variable portion when said footnotes and footnote references are designated.

8. The method according to any one of claims 1 to 7 characterized in that it includes causing said beginning designation for said variable portion to be reset on a document section basis.

**Patentansprüche**

1. Methode zur Bezeichnung von Fussnoten und Fussnotenreferenzen während der Verarbeitung eines mit Fussnoten versehenen Dokuments in einem Wortverarbeitungssystem mit einer Tastatur (14), einem Darstellungsmittel (22), einem Prozessor (10) und einem Speicher (20), bei der die genannte Verarbeitung aus der Vorbereitung des Haupttextes und des Fussnotentextes mittels der genannten Tastatur und des genannten Darstellungsmittels sowie getrenntem Einlesen des Fussnotentextes und des Haupttextes in den genannten Speicher besteht, wobei diese Method durch folgende, für eine einzusetzende Fussnote durchzuführende Schritte gekennzeichnet ist:

Darstellung eines Manüs auf dem genannten Darstellungsmittel, das dem Operator die Anweisungen gibt, die es ermöglichen, den variablen Teil der Fussnotenbezeichung und die entsprechende Fussnotenreferenz zu definieren,

mittels der genannten Tastatur, Eingabe einer beginnenden Bezeichnung einer Zeichenkategorie für den genannten variablen Teil in das System, um einen Satz Fussnoten zu bezeichnen, und

durch den Prozessor, automatische Änderung der für die nachfolgenden Fussnoten gültigen Bezeichungen, so dass jeder Satz Fussnoten während des Zusammensetzens des mit Fussnoten versehenen Dokuments ausdrücklich durch eine Kombination getrennt gespeicherter Fussnoten- und Haupttexte bezeichnet wird.

2. Method nach Anspruch 1, dadurch gekennzeichnet, dass die Kategorie für den genannten variablen Teil entweder ein numerisches oder ein anderes graphisches Zeichen aufweist.

3. Method nach Anspruch 2, dadurch gekennzeichnet, dass sie Schritte umfasst, durch welche der genannte Satz mit Nummern der genannten anderen graphischen Zeichen bezeichnet, wird, die mit der genannten beginnenden Bezeichnung übereinstimmen, wenn die genannte Kategorie der anderen graphischen Zeichen ausgewählt wurde.

4. Methode nach Anspruch 2, dadurch gekennzeichnet, dass sie dazu führt, dass der genannte Satz mit einer gewählten Nummer als beginnende Bezeichnung gekennzeichnet wird, wenn eine numerische Kategorie ausgewählt wurde.

5. Methode nach Anspruch 3, zu der das Hinzufügen eines graphischen Zeichens zu jeder der aufeinanderfolgenden Bezeichnungen der genannten Fussnoten und Fussnotenreferenzen gehört, wenn die genannte Kategorie der anderen graphischen Zeichen ausgewählt wurde.

6. Methode nach allen der Ansprüche 1 bis 5, dadurch gekennzeichnet, dass sie die Wahl einer indizierten Position für die genannten Bezeichnungen aufweist und diese Bezeichnungen dazu bringt, die genannten Fussnoten und Fussnotenreferenzen in einer indizierten Position zu bezeichnen.

7. Method nach allen der Ansprüche 1 bis 6, dadurch gekennzeichnet, dass sie die Definition eines festen Teiles der genannten Bezeichnung aufweist, wozu ein Zeichen ausgewählt wird, um die genannte variable Position zu begleiten und dieses genannte Zeichen dazu gebracht wird, die genannte variable Position zu begleiten, wenn die genannten Fussnoten und Fussnotenreferenzen bezeichnet werden.

8. Method nach allen der Ansprüche 1 bis 7, dadurch gekennzeichnet, dass sie bewirkt, dass die genannte beginnende Bezeichnung für den genannten variablen Teil auf einer Dokumentenabschnittsbasis nachgestellt wird.

**Revendications**

1. Une méthode pour désigner des renvois en bas de pages et des références de renvois en bas de pages pendant le traitement d'un document à renvois en bas de pages dans un système de traitement de

**0 094 514**

mots comprenant un clavier (14), un affichage (22), un processeur (10) et une mémoire (20), ledit traitement consistant à préparer le texte principal et le texte des renvois en bas de pages à l'aide dudit clavier et dudit affichage, et à emmagasiner séparément ledit texte des renvois en bas de pages et ledit texte principal en mémoire, ladite méthode étant caractérisée par les étapes suivantes qui sont exécutées pour un renvoi en bas de page à entrer:

l'affichage d'un menu sur ladite unité d'affichage, donnant à l'opérateur les indications nécessaires à la définition de la partie variable de la désignation dudit renvoi en bas de page et de la référence de renvoie en bas de page correspondante,

l'entrée dans le système au moyen dudit clavier, d'une désignation de début d'une catégorie de caractères pour ladite partie variable, pour désigner un ensemble de renvois en bas de pages, et

le changement automatique par ledit processeur des désignations à appliquer aux renvois en bas de pages suivants de façon que chaque ensemble de renvois en bas de pages soient distinctement désignés à la combinaison de texte de renvois en bas de page et de texte principal emmagasinés séparément pendant l'assemblage du document à renvois de bas de pages.

2. La méthode selon la revendication 1 caractérisée en ce que la catégorie pour ladite partie variable comprend soit un caractère numérique, soit un autre caractère graphique.

3. La méthode selon la revendication 2 caractérisée en ce qu'elle comprend la désignation dudit ensemble avec des nombres desdits autres caractères graphiques, correspondant à ladite désignation de début lorsque ladite autre catégorie de caractères graphiques a été sélectionnée.

4. La méthode selon la revendication 2 caractérisée en ce qu'elle comprend la désignation dudit ensemble avec un nombre sélectionné comme désignation de début lorsqu'une catégorie numérique a été sélectionnée.

5. La méthode selon la revendication 3 comprenant l'addition d'un caractère graphique à chaque désignation se succédant pour lesdits renvois en bas de pages et lesdites références des renvois en bas de pages lorsque ladite autre catégorie de caractères graphiques a été sélectionnée.

6. La methode selon l'une quelconque des revendications 1 à 5 caractérisée en ce qu'elle comprend la sélection d'une position indexée pour lesdites désignations et la désignation par lesdites désignations desdits renvois en bas de pages et références des renvois en bas de pages dans une position indexée.

7. La méthode selon l'une quelconque des revendications 1 à 6 caractérisée en ce qu'elle comprend la définition d'une partie fixe de ladite désignation par la sélection d'un caractère pour accompagner ladite partie variable et l'accompagnement par ledit caractère de ladite partie variable lorsque lesdits renvois en bas de pages et références de renvois en bas de pages, sont désignés.

8. La méthode selon l'une quelconque des revendications 1 à 7 caractérisée en ce qu'elle comprend la restauration de ladite désignation de début pour ladite partie variable selon une section du document.

**FIG. 1**

**FIG. 2**

**FIG. 3**

**FIG. 4**

100

**FIG. 5**

101

**FIG. 6**

100

**FIG. 7**

102

1

FIG. 8

FIG. 9

PROCESSOR

STATUS REGISTER 85
CONTROL 72
CLOCK 74

TEMPORARY SCRATCH REGISTER (5) 83
CONTROL 72
CLOCK 74

BUS CONTROL LOGIC UNIT 76
CLOCK 74
CONTROL 72

MEMORY BUS 46

PROGRAM I/O CONTROL 11
CLOCK 74
CONTROL 72
80

PROGRAM COUNTER 88
CONTROL 72
CLOCK 74

DATA POINTER REGISTER 86
CONTROL 72
CLOCK 74

STACK POINTER REGISTER 87
CONTROL 72
CLOCK 74

CONTROL LOGIC UNIT 70
CLOCK 74

ARITHMETIC LOGIC UNIT 73
CLOCK 74

CONTROL 72

TWO WAY DATA & ADDRESS BUS 82

EXTERNAL CLOCK 74
CLOCK 74
40